# EUROPEAN PATENT APPLICATION

(11) **EP 2 455 837 A1**
(43) Date of publication of application: **23.05.2012**
(21) Application number: 10191679.9
(22) Date of filing: 18.11.2010
(51) Int. Cl.: G06F 1/18

(54) **Computer system comprising a connector assembly**

(71) Applicant: Giga-Byte Technology Co., Ltd., Hsin-Tien Taipei County (TW)
(72) Inventor: Yi, Chieh-Shih, Hsin Tien 231 (TW)
(74) Representative: Schwerbrock, Florian

(57) **Abstract**

A computer system for connection with a plurality of peripheral devices includes an electronic board and a connector assembly. The electronic board includes a control unit and a first connector. The control unit is electrically coupled to the first connector. The connector assembly includes a second connector and a plurality of input/output (I/O) ports. The second connector is electrically coupled to the I/O ports and the first connector of the electronic board, whereby the peripheral devices are allowed to be electrically connected to control unit via the I/O ports, the second connector of the connector assembly and the first connector of the electronic board.

## Description

### BACKGROUND OF INVENTION

### 1. Field of Invention

The present invention relates to a computer system and pertains particularly to a computer system with its input/output ports integrated on a separate connector assembly thereof, rather than on an electronic board of the computer system.

### 2. Related Prior Art

A conventional electronic board, such as a motherboard, is generally equipped with all types of input and output (I/O) ports in order to connect with a variety of peripheral devices, such as video display, keyboard, mouse, printer, projector, portable hard disk drive, internet communication device, and so forth. The I/O ports may be implemented as USP ports, IEEE 1394 ports, network ports, parallel printer ports or display ports. However, in some cases, the I/O ports are rarely used. Take a server system for example, the server system generally includes a number of blade servers and a rack on which the blade servers are mounted. Each blade server is equipped with a set of I/O ports. In practice, however, only one set of the I/O ports of one of the blade server is in use. Thus, the rest I/O ports of the other blade servers are barely used.

Similar to the server system, a personal computer is usually equipped with a number of I/O ports on an electronic board thereof. These I/O ports generally occupy certain space in a chassis of the personal computer. However, if these I/O ports are rarely used or often idle for a long time, no doubt they become waste in the personal computer. Besides, these redundant I/O ports may obstruct airflow into or out of the chassis, which results in poor heat dissipation for the computer. Moreover, there is no chance to change the quantity or types of the I/O ports of the computer since they are subject to specific standards and affixed on the electronic board while manufacturing.

In one example of a prior art, a thin computer is disclosed to include a motherboard on which a connector is formed for connection with an expansion interface card. Also, the expansion interface card defines two slots therein for reception of two modules, such as VGA module and Power module. Even so, the thin computer still employs a set of I/O ports for connection with other peripheral devices, and the I/O ports can only be disposed external to the thin computer.

Another example of a conventional external connector assembly for connection with a computer host is disclosed to include a variety of I/O ports on a side and a link cable on the other side. The link cable of the connector assembly has a number of plugs for connection to the respective I/O ports of the computer host. Even with the help of the external connector assembly, the computer host still employs other I/O ports on an electronic board thereof for connection with other external peripheral devices. No space in the computer chassis is saved.

### SUMMARY OF INVENTION

Broadly stated, the present invention is directed to a computer system with no I/O ports equipped on an electronic board thereof.

Specifically, the computer system is provided for connection with a plurality of peripheral devices and generally includes a computer host and a connector assembly. The computer host includes a housing and an electronic board disposed in the housing. The electronic board includes a control unit and a first connector. The control unit is electrically coupled with the first connector. On the other hand, the connector assembly includes a second connector and a plurality of I/O ports. The second connector is electrically coupled to the first connector and the I/O ports. In this manner, the peripheral devices are allowed to be connected with the control unit of the computer host via the I/O ports, the second connector of the connector assembly and the first connector of the electronic board.

Compared to the prior art, all the I/O ports in the present invention are now formed on the connector assembly. That is, there are no I/O ports on the electronic board and therefore the space inside the device could be saved. Also, the connector assembly may be selectively coupled to the computer host. For example, the connector assembly is detachably plugged in the electronic board inside the computer housing. Alternatively, the connector assembly may be movably coupled to the electronic board outside the computer housing. In this way, airflow in or out of the computer housing is not obstructed by the I/O ports and thereby the heat dissipation efficiency of the computer host could be greatly improved. Therefore, the user of the present invention may dispose the I/O ports outside or inside as desired.

Preferably, the computer housing has a side plate defining a plurality of vents thereon, and the connector assembly is mounted in the housing at a position staggered from that of the vents.

Preferably, the second connector of the connector assembly is constructed to connect with a plurality of electronic boards. In this case, the second connector is electrically coupled to the I/O ports on one hand and to the first connector of each of the electronic boards on the other hand. As such, the peripheral devices are allowed to be electrically connected to the control unit of each of the electronic boards via the I/O ports, the second connector of the connector assembly and the first connector of the respective electronic board. Preferably, a switch may be included in the second connector to selectively control the electrical connection between the I/O ports and the first connectors of the electronic boards. Further, a button may be included in the connector assembly for controlling operation of the switch.

Further features and advantages of the present invention will be appreciated by review of the following detailed description of the invention.

### BRIEF DESCRIPTION OF DRAWINGS

The invention may be more fully understood by reading the following description of the preferred embodiments of the invention, in conjunction with the appended drawings wherein:
FIG. 1 is a partial exploded view of a computer system in accordance with one embodiment of the invention;
FIG. 2 is a perspective view of the computer system in FIG. 1; and
FIG. 3 is a partial exploded view of a computer system in accordance with another embodiment of the invention.

### DETAILED DESCRIPTION OF EMBODIMENTS

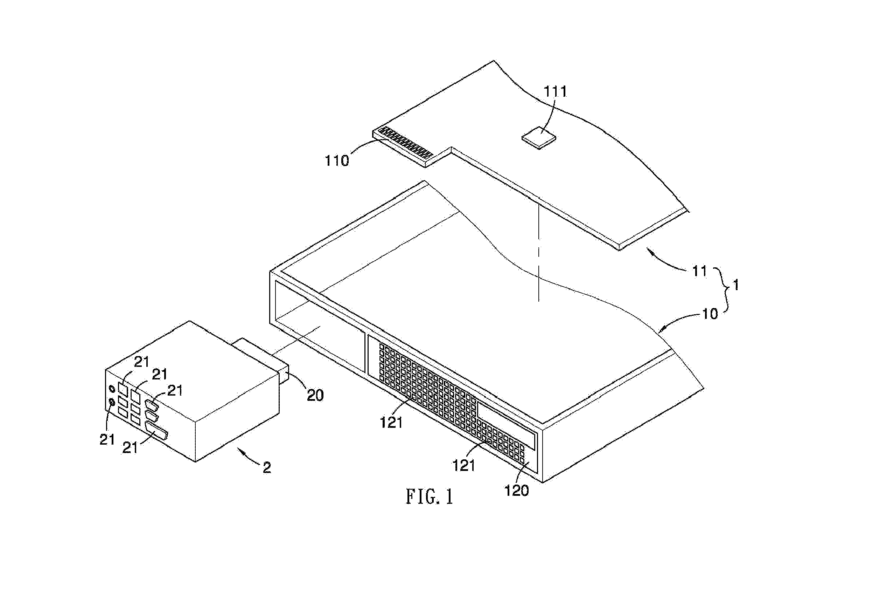

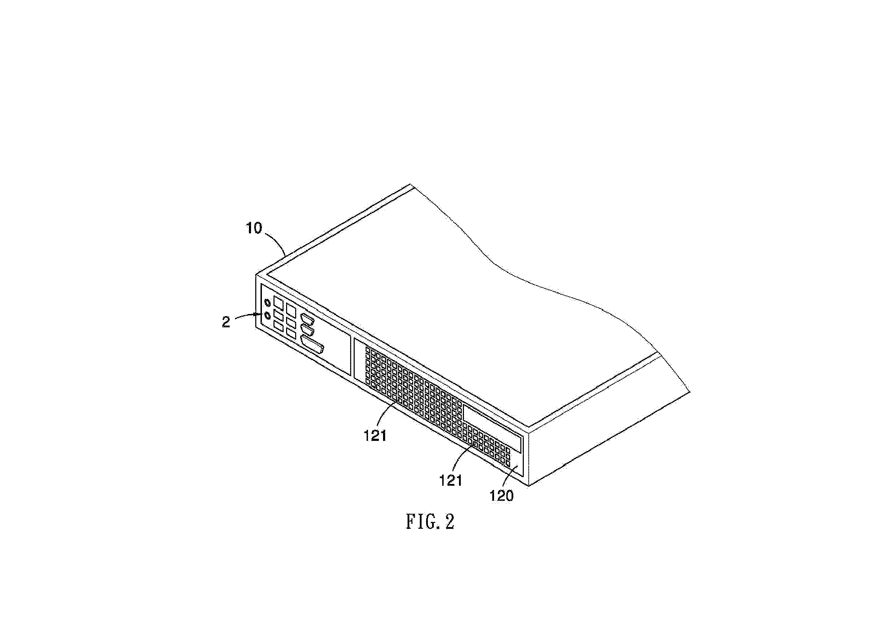

Turning in detail to the drawings, a computer system in accordance with one embodiment of the invention is illustrated in FIGS. 1 and 2. The computer system is provided for connection with a plurality of external peripheral devices and generally includes a computer host 1 and a connector assembly 2. The computer host 1 includes a housing 10 and an electronic board 11 disposed in the housing 10. The electronic board 11, such as a motherboard, includes thereon a control unit 111 and a first connector 110. The control unit 111 is electrically coupled to the first connector 110 and is configured for controlling input and output of data between the computer system and those peripheral devices (not shown). For instance, the control unit 111 may be a Southbridge chip, a Super I/O chip or a chip set containing the Southbridge chip and the Super I/O chip. Conventionally, a prior art control unit is connected to a plurality of I/O ports each corresponding to at least one external peripheral device. Compared to the prior art, however, the control unit 111 of this invention is electrically coupled to the first connector 110 and no I/O ports is provided on the electronic board 11 for the peripheral devices. The first connector 110 may be formed of a plurality of electrical traces, as depicted in FIG. 1. Alternatively, the first connector 110 may be a male connector, a female connector or the like.

The connector assembly 2 includes a second connector 20 on one side and a plurality of I/O ports 21 on the other side. These I/O ports 21 may be USP ports, IEEE 1394 ports, audio output ports, SATA ports, PS/2 ports, serial ports, parallel ports, ESATA ports, combined USB/ESATA ports, etc, for connection with various peripheral devices respectively. The second connector 20 may be formed of a plurality of electrical traces, a receptacle, a plug or even a cable with a connection head. Anyhow the second connector 20 is electrically coupled to the I/O ports 21 as well as the first connector 110 of the electronic board 11. In this way, the peripheral devices are allowed to be electrically connected to control unit 111 via the I/O ports 21, the second connector 20 of the connector assembly 2 and the first connector 110 of the electronic board 11. In other words, any peripheral device that is supported by the electronic board 11 can be linked to the control unit 111 of the electronic board 11 and be controlled by the same. Compared to the prior art, since no I/O ports is directly provided on the electronic board 11, the unsolved problem of wasting space or airflow obstruction in a computer housing in the past can be solved in the present invention. Preferably, a variety of connector assemblies may be manufactured for selection by a user, as long as they are supported by the electronic board 11 in format. Thus, there is no longer need to change the whole electronic board 11 just to replace new I/O ports.

In this embodiment, the computer housing 10 has a side plate 120 defining a plurality of vents 121 thereon. The connector assembly 2 is mounted in the housing 10 at a position staggered from that of the vents 121. Specifically, the connector assembly 2 is detachably plugged in the housing 10. However, in another example, the connector assembly 2 may be coupled to the first connector 110 of the electronic board 11 via a cable (not shown) and is movably disposed outside the housing 10. That is, the connector assembly 2 is capable of being selectively located either inside or outside the housing 2 as desired.

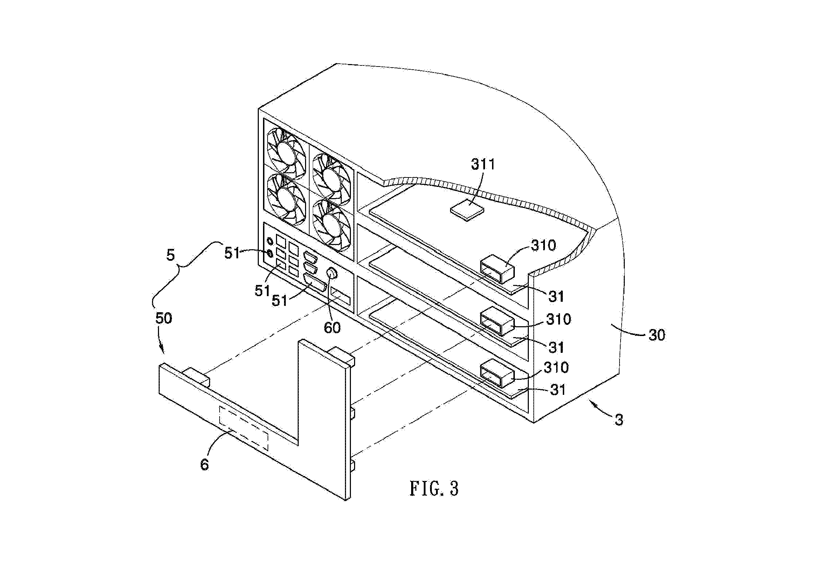

With reference to FIG. 3, a computer system in accordance with another embodiment of the invention is illustrated. In this embodiment, the second connector 50 is configured to couple with a plurality of electronic boards 31. Specifically, the computer system is provided for connection with a plurality of peripheral devices (not shown) and includes a computer host 3 and a connector assembly 5. The computer host 3 includes a housing 30 and three electronic boards 31 disposed in separate compartments of the housing 30. In another example, two or four electronic boards 31 may be included in the computer host 3. Each of the electronic boards 31 includes thereon a control unit 311 and a first connector 310. The control unit 311 of each of the electronic boards 31 is electrically coupled to the respective first connector 310 and is configured for controlling input and output of data between the computer system and those peripheral devices. The control unit 311 may be a Southbridge chip, a Super I/O chip or a chip set containing the Southbridge chip and the Super I/O chip. On the contrary, in conventional electronic boards, each control unit is connected to a plurality of I/O ports each corresponding to at least one external peripheral device. However, in this invention, the control unit 311 of each of the electronic boards 31 is electrically coupled to the first connector 310 and no I/O ports is provided on the electronic boards 31 for the peripheral devices. The first connector 310 may be made of a plurality of electrical traces, a male connector, a female connector or the like.

The connector assembly 5 includes a second connector 50 and a plurality of I/O ports 51. These I/O ports 51 may be USP ports, IEEE 1394 ports, audio output ports, SATA ports, PS/2 ports, serial ports, parallel ports, ESATA ports, combined USB/ESATA ports, etc, for connection with the various peripheral devices respectively. The second connector 50 is electrically coupled to the I/O ports 51 as well as the first connector 310. In this way, the peripheral devices are allowed to be electrically connected to control unit 311 of each of the electronic boards 31 via the I/O ports 51, the second connector 50 of the connector assembly 5 and the first connector 310 of the respective electronic board 31. It is noted that the second connector 50 may be in a form of a signal transfer board.

Thus, any peripheral device that is supported by the electronic board 31 can be linked to the control unit 311 of each of the electronic boards 31 and be controlled by the same. Compared to the prior art, since no I/O ports is directly mounted on the electronic boards 31, the unsolved problem of wasting space or airflow obstruction in a computer housing in the past, can be solved in the invention.

Preferably, the second connector 50 further includes a switch 6 configured to selectively control the electrical connection between the I/O ports 51 and the first connectors 310 of the electronic boards 31. Further, the connector assembly 5 further includes thereon a button 60. The button 60 is electrically coupled to the switch 6 for controlling operation of the switch 6.

It will be appreciated that although a particular embodiment of the invention has been shown and described, modifications may be made. It is intended in the claims to cover such modifications which come within the spirit and scope of the invention.

## Claims

1. A computer system for connection with a plurality of peripheral devices, the computer system comprising:
an electronic board including a control unit and a first connector; the control unit controlling input and output of data between the computer system and the plurality of peripheral devices, and the first connector electrically coupled to the control unit; and
a connector assembly including a plurality of input/output (I/O) ports for connection with the peripheral devices, and a second connector electrically coupled to the plurality of I/O ports and the first connector of the electronic board, whereby the peripheral devices are allowed to be electrically connected to the control unit by the connection of the I/O ports, the second connector of the connector assembly and the first connector of the electronic board.

2. The computer system of claim 1, further comprising a housing having a side plate defining a plurality of vents thereon, and the connector assembly is mounted in the housing and staggered from the vents.

3. The computer system of claim 1, further comprising a housing enclosing the electronic board, wherein the connector assembly is detachably mounted in the housing.

4. The computer system of claim 1, further comprising a housing enclosing the electronic board, wherein the connector assembly is coupled to the first connector of the electronic board by a cable and is movably disposed outside the housing.

5. The computer system of claim 1, further comprising a housing enclosing the electronic board, wherein the connector assembly is removable for being selectively located either inside or outside the housing.

6. A computer system for connection with a plurality of peripheral devices, the computer system comprising:
a plurality of electronic boards, each including a control unit for controlling input and output of data between the computer system and the peripheral devices, and a first connector electrically coupled to the control unit; and
a connector assembly including a plurality of I/O ports for connection with the peripheral devices, and a second connector electrically coupled to the I/O ports and the first connectors of the electronic boards, whereby the peripheral devices are allowed to be electrically connected to the control unit of each of the electronic boards through the connection of the plurality I/O ports, the second connector of the connector assembly and the first connector of the respective electronic board.

7. The computer system of claim 6, wherein the second connector further includes a switch configured to selectively establish or break the electrical connection between the plurality I/O ports and the first connectors of the electronic boards.

8. The computer system of claim 7, wherein the connector assembly further includes a button electrically coupled to the switch for operating the switch.
